# EUROPÄISCHE PATENTSCHRIFT

(11) **EP 2 534 035 B1**
(45) Veröffentlichungstag und Bekanntmachung des Hinweises auf die Patenterteilung: **20.08.2014**
(21) Anmeldenummer: 11702197.2
(22) Anmeldetag: 03.02.2011
(51) Int. Cl.: B62M 3/00, B62M 6/50, B62K 19/34

(54) **ELEKTRISCHES FAHRRAD MIT PEDALKRAFTGESTEUERTEM ELEKTRISCHEM ANTRIEB**
ELECTRICAL BICYCLE WITH PEDAL FORCE CONTROLLED ELECTRIC DRIVE
BICYCLETTE ELECTRIQUE AVEC COMMANDE D'UN ENTRAÎNEMENT ÉLECTRIQUE

(30) Priorität: 10.02.2010 DE 102010001775
(43) Veröffentlichungstag der Anmeldung: 19.12.2012
(73) Patentinhaber: Robert Bosch GmbH, 70442 Stuttgart (DE)
(72) Erfinder: ZYWIETZ, Martin, 71642 Ludwigsburg (DE); KIMMICH, Peter, 71101 Schoenaich (DE); NGUYEN, Quoc-Dat, 72760 Reutlingen (DE); STOPPER, Simone, 72393 Burladingen-Salmendingen (DE)
(86) Internationale Anmeldenummer: PCT/EP2011/051551
(87) Internationale Veröffentlichungsnummer: WO 2011/098388

(56) Entgegenhaltungen:
- EP-A1- 0 983 934
- WO-A1-2005/021368
- DE-A1- 3 813 681
- GB-A- 2 456 821
- US-A1- 2004 069 073

## Beschreibung

### Stand der Technik

Die vorliegende Erfindung betrifft ein elektrisches Fahrrad mit einem pedalkraftgesteuertem elektrischen Antrieb.

In jüngster Zeit erfreuen sich Fahrräder mit elektrischem Hilfsantrieb einer steigenden Beliebtheit. Der elektrische Antrieb kann dabei nach Wunsch des Fahrers hinzugeschaltet werden, so dass eine beschränkte Tretunterstützung bereitgestellt wird. Alternativ kann über einen gewissen Zeitraum auch nur mittels des elektrischen Antriebs gefahren werden. Wenn der elektrische Antrieb zur Tretunterstützung genutzt werden soll, sollte es möglich sein, in Abhängigkeit von einer vom Fahrer über die Pedale bereitgestellten Antriebskraft eine Antriebskraft durch den elektrischen Antrieb zu variieren. Hierbei sollte insbesondere auf einen kostengünstigen und einfachen Aufbau geachtet werden. Ferner ist im Bereich des Kurbeltriebs des Fahrrads auch nur ein begrenzter Bauraum vorhanden.

Dokument EP 0 983 934 A1 zeigt ein elektrisches Fahrrad mit pedalkraftgesteuerten elektrischen Antrieb, gemäß dem Stand der Technik.

### Offenbarung der Erfindung

Das erfindungsgemäße elektrische Fahrrad mit den Merkmalen des Anspruchs 1 weist demgegenüber den Vorteil auf, dass eine exakte Messung einer vom Fahrer über die Pedale aufgebrachten Kraft möglich ist. Dies ermöglicht es weiterhin, dass in Abhängigkeit von dieser aufgebrachten Fahrerkraft ein elektrischer Antrieb angesteuert werden kann, um gegebenenfalls noch eine zusätzliche, durch den elektrischen Antrieb aufgebrachte Antriebskraft bereitzustellen. Dies wird erfindungsgemäß dadurch erreicht, dass ein Kraftsensor an einem Tretlager angeordnet ist, wobei der Kraftsensor mit einer

Steuereinheit zur Steuerung des elektrischen Antriebs verbunden ist. Der Kraftsensor erfasst dabei eine durch den Fahrer auf den Kurbeltrieb ausgeübte Kraft am Tretlager. Durch das Treten des Fahrers wird nämlich eine Kraft auf ein Pedal ausgeübt, so dass sich eine Kette des elektrischen Fahrrads spannt. Hierdurch wird eine Strebe, welche eine Hinterradnabe mit dem Tretlager verbindet, gestaucht, so dass eine Krafteinwirkung in Richtung auf das Tretlager erfolgt, welche der vom Fahrer aufgebrachten Kraft proportional ist. Somit kann über den Kraftsensor am Tretlager eine vom Fahrer bereitgestellte Antriebskraft ermittelt werden. Erfindungsgemäß ist es hierbei auch möglich, dass eine vom Fahrer aufgebrachte Antriebskraft bereits schon beim Anfahren unmittelbar gemessen wird und entsprechend der elektrische Antrieb angesteuert werden kann. Somit kann ein pedalkraftgesteuerter elektrischer Antrieb bereitgestellt werden.

Der Kraftsensor umfasst eine Druckmesskammer mit einem darin angeordneten Drucksensor sowie ein Zusatzlager zur linearen Lagerung eines Außenrings des Tretlagers. Durch das Zusatzlager ist der Außenring des Tretlagers in einer linearen Richtung beweglich gelagert, so dass bei einer Krafteinwirkung auf das Tretlager eine Verschiebung des Außenrings auftritt, welche eine Druckänderung in der Druckmesskammer verursacht. Diese Druckänderung kann dann durch den Drucksensor aufgenommen werden. Somit kann eine durch den Fahrer bereitgestellte Kraft am Tretlager erfasst werden.

Dabei ist am Außenring des Tretlagers ein Kolbenelement angeordnet. Dabei sind ferner die Druckmesskammer und der Außenring räumlich voneinander getrennt, wobei das Kolbenelement in die Druckmesskammer reicht. Somit bewirkt eine Bewegung des Außenrings aufgrund einer Krafteinwirkung an den Pedalen eine Verschiebung des Kolbenelements, was zu einer Druckänderung in der Druckmesskammer führt.

Die Verwendung der Druckmesskammer ermöglicht es ferner, dass beispielsweise der Drucksensor unmittelbar auf einer Platine eines Steuergeräts angeordnet werden kann, wobei der Drucksensor z.B. über Schläuche mit der Druckmesskammer verbunden ist. Hierdurch ergibt sich zwar ein gewisser Aufwand durch das Verlegen der Druckschläuche, jedoch kann das Steuergerät, insbesondere eine gedruckte Platine des Steuergeräts, deutlich vereinfacht werden, so dass sich hieraus große Kostenvorteile ergeben. Ferner ist es möglich, dass für das elektrische Fahrrad dadurch nur ein zentrales Steuergerät vorgesehen wird, welches alle erforderlichen Steueraufgaben beim elektrischen Fahrrad, wie z.B. ein Batteriemanagement oder ein Fahrradcomputer, usw., in das zentrale Steuergerät integriert.

Weiter umfasst das erfindungsgemäße Fahrrad eine Druckregulierungseinrichtung, welche einen Druck in der Druckmesskammer einstellt. Hierdurch ist es möglich, dass die Druckmesskammer für verschiedene Anwendungsfälle, z.B. unterschiedliche elektrische Fahrräder wie beispielsweise ein Stadtfahrrad oder ein Fahrrad für Langstrecken usw., verwendet werden kann.

Die Unteransprüche zeigen bevorzugte Weiterbildungen der Erfindung.

Besonders bevorzugt ist die Druckmesskammer dabei mit einem flüssigen Medium oder einem gasförmigen Medium, insbesondere Luft, gefüllt.

Gemäß einer bevorzugten Alternative der vorliegenden Erfindung ist der Kraftsensor ein Piezosensor, welcher am Außenring angeordnet ist. Der Piezosensor kann dabei unmittelbar mit dem Außenring in Kontakt stehen oder über ein Zwischenelement am Außenring angeordnet sein. Der Piezosensor kann dabei auch in den Außenring integriert sein.

Gemäß einer weiteren bevorzugten Alternative der vorliegenden Erfindung ist der Kraftsensor ein Dehnungsmessstreifen. Der Dehnungsmessstreifen erfasst dabei eine Verformung am Außenring des Tretlagers aufgrund einer Krafteinwirkung durch den Fahrer. Besonders bevorzugt ist dabei in einem Teilbereich des Außenrings ein elastisches Material vorgesehen, wobei der Dehnungsmessstreifen am elastischen Material angeordnet ist und eine Verformung des elastischen Materials aufgrund einer Krafteinwirkung durch Treten des Fahrers erfasst.

Gemäß einer weiteren bevorzugten Alternative der Erfindung ist der Kraftsensor derart aufgebaut, dass er eine mit einer Flüssigkeit gefüllte Bohrung aufweist, welche direkt an einer Außenseite des Außenrings angeordnet ist. Somit ist der Außenring in Kontakt mit der Flüssigkeit in der Bohrung, wobei an der Bohrung ferner ein Drucksensor zur Erfassung einer Druckänderung angeordnet ist. Bei einer Krafteinwirkung auf das Tretlager durch ein Treten des Fahrers verschiebt sich der Außenring des Tretlagers, so dass der Drucksensor in der Bohrung eine Druckänderung erfassen kann.

Vorzugsweise ist die Steuereinheit des elektrischen Fahrrads derart ausgelegt, dass der elektrische Antrieb, basierend auf einem über den Kraftsensor am Tretlager erfassten Pedalkraftwert, den elektrischen Antrieb derart ansteuert, dass dieser eine Antriebskraft bereitstellt, so dass immer eine vorbestimmte, konstante Gesamtantriebskraft, umfassend die Pedalkraft des Fahrers und die vom elektrischen Antrieb bereitgestellte Kraft, vorhanden ist. Hierdurch wird ein gleichmäßiges Fahren des elektrischen Fahrrads sichergestellt. Je nach Höhe der vom Fahrer aufgebrachten Antriebskraft wird zusätzlich der elektrische Antrieb betrieben, wobei es auch möglich ist, dass der elektrische Antrieb nicht betrieben wird, wenn der Fahrer über die Pedale eine ausreichende Antriebskraft bereitstellt. Alternativ kann der elektrische Antrieb auch derart angesteuert werden, dass jeweils ein vorbestimmter Prozentsatz, z.B. 20 %, zu der vom Fahrer aufgebrachten Antriebskraft zusätzlich vom elektrischen Antrieb aufgebracht wird. Hierdurch unterstützt der elektrische Antrieb den Fahrer kontinuierlich um den gleichen Prozentsatz. Dadurch ist die vom elektrischen Antrieb bereitgestellte Leistung an die vom Fahrer durch Muskelkraft aufgebrachte Leistung gekoppelt.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Ansicht eines elektrischen Fahrrads gemäß einem ersten Ausführungsbeispiel der Erfindung,
- Figur 2: eine schematische Darstellung des mechanischen Antriebs des Fahrrads von Figur 1,
- Figur 3: eine schematische Schnittansicht eines Tretlagers von Figur 1,
- Figur 4: eine schematische Draufsicht eines Tretlagers für ein Fahrrad gemäß einem zweiten Ausführungsbeispiel der Erfindung,
- Figur 5: eine schematische Schnittansicht eines Tretlagers eines Fahrrads gemäß einem dritten Ausführungsbeispiel der Erfindung,
- Figur 6: eine perspektivische Ansicht eines Tretlagers für ein Fahrrad gemäß einem vierten Ausführungsbeispiel der Erfindung, und
- Figur 7: eine schematische Schnittansicht eines Tretlagers für ein Fahrrad gemäß einem fünften Ausführungsbeispiel der Erfindung.

### Bevorzugte Ausführungsformen der Erfindung

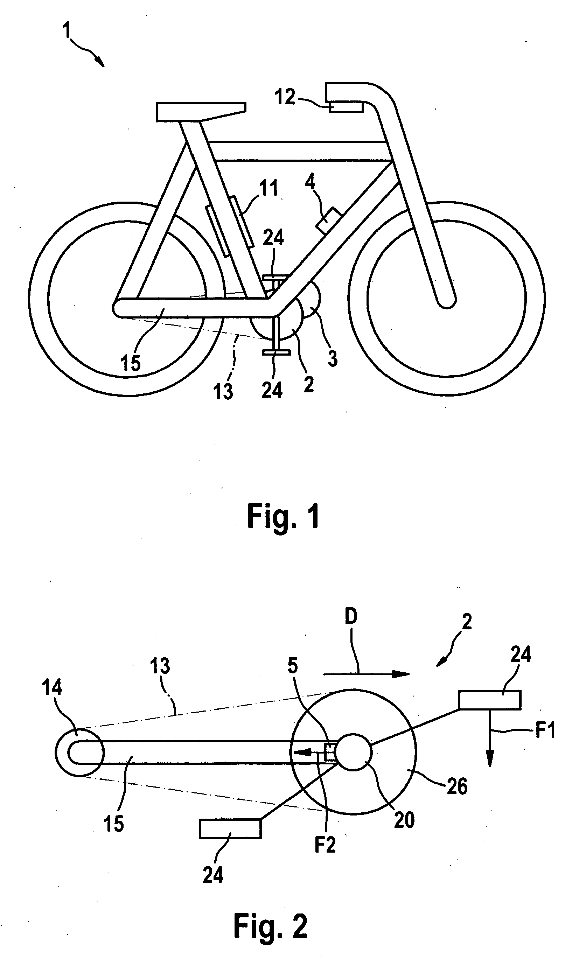

Nachfolgend wird unter Bezugnahme auf die Figuren 1 bis 3 ein Fahrrad 1 gemäß einem ersten bevorzugten Ausführungsbeispiel der Erfindung im Detail beschrieben.

Wie aus der schematischen Ansicht von Figur 1 ersichtlich ist, umfasst das elektrische Fahrrad 1 einen Kurbeltrieb 2 sowie einen elektrischen Antrieb 3. Der elektrische Antrieb 3 wird mittels einer Steuereinheit 4 gesteuert, wobei die Steuereinheit 4 mit einem Handschalter 12 am Lenkrad des Fahrrads verbunden ist. Mittels des Handschalters 12 kann ein Fahrer das Fahren mit elektrischer Unterstützung einschalten bzw. ausschalten. Ferner umfasst das Fahrrad 1 eine wiederaufladbare Batterie 11, welche den elektrischen Antrieb 3 sowie die Steuereinheit 4 mit Strom versorgt.

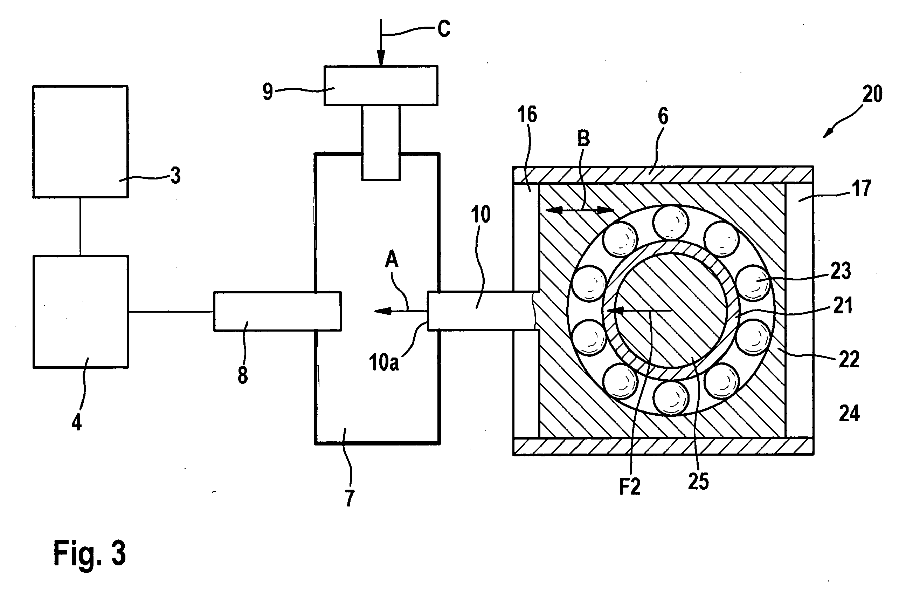

Der Kurbeltrieb 2 ist schematisch in Figur 2 und 3 gezeigt. Der Kurbeltrieb 2 umfasst dabei ein Tretlager 20 mit einem Innenring 21, einem Außenring 22 und zwischen dem Innenring und dem Außenring angeordneten Wälzkörpern 23 in Form von Kugeln (siehe Figur 3). Ferner umfasst der Kurbeltrieb 2 Pedale 24 sowie eine Tretwelle 25. Die Tretwelle 25 ist im Tretlager 20 gelagert. An der Tretwelle 25 ist ferner ein großes Zahnrad 26 angeordnet, welches sich mit einer Kette 13 im Eingriff befindet, und mit einem am Hinterrad angeordneten Ritzel 14 verbunden ist. Eine Hinterstrebe 15 verbindet dabei die Hinterradnabe mit dem Tretlager 20.

Wie aus der schematischen Ansicht von Figur 3 ersichtlich ist, ist der Außenring 22 als Lagerschale ausgebildet, welche in einem Zusatzlager 6 in linearer Richtung des Doppelpfeils B in beiden Richtungen verschiebbar ist. An der Lagerschale ist ein Kraftsensor 5 mit einem Kolben 10 angeordnet, dessen eines Ende 10a in eine Druckmesskammer 7 reicht. Die Druckmesskammer 7 ist als luftgefüllte Hohlkammer ausgebildet und ein Drucksensor 8 ist an der Druckmesskammer 7 angeordnet. Ferner umfasst die Druckmesskammer 7 eine Druckregulierungseinrichtung 9, welche ebenfalls als Kolbenelement ausgebildet ist und welche mit einer Vorspannkraft C einen vorbestimmten Druck in der Druckmesskammer 7 erzeugt. Eine Bewegung des Tretlagers 20 kann dabei dadurch realisiert werden, dass jeweils in Bewegungsrichtung seitlich an dem Außenring 22 ein erster Luftspalt 16 und ein zweiter Luftspalt 17 vorgesehen sind. Zur besseren Führung weist dabei der Außenring 22 ebenfalls eine ebene Außenfläche auf, welche am Zusatzlager 6 geführt ist.

Die Funktion des erfindungsgemäßen Fahrrads ist dabei wie folgt. Wenn ein Fahrer in die Pedale tritt, erzeugt er eine Tretkraft F1 an den Pedalen 24 (siehe Figur 2). Wie in Figur 2 durch den Pfeil D angedeutet, erfolgt hierbei eine Kettenspannung, was zu einer Stauchung der Hinterstrebe 15 führt. Dadurch wirkt eine Kraft in Richtung auf den Kurbeltrieb 2 und damit eine Kraft F2, die auf das Tretlager 20 wirkt. Aufgrund dieser Kraft F2 bewegt sich das Tretlager 20 im Zusatzlager 6 in Richtung des Pfeils A, so dass der Kolben 10 weiter in die Druckmesskammer 7 vorgeschoben wird. Hierdurch ändert sich der Druck in der Druckmesskammer 7, da der Kolben der Druckregulierungseinrichtung 9 fixiert ist. Diese Druckänderung kann durch den Drucksensor 8 erfasst werden. Somit ist die Druckänderung in der Druckmesskammer 7 proportional zu einer vom Fahrer aufgebrachten Tretkraft F1. Die durch den derart aufgebauten Kraftsensor 5 erfasste Druckänderung wird somit der Steuereinheit 4 zugeführt, welche dann, basierend beispielsweise auf im Vorhinein abgespeicherten Werten oder aufgrund einer Berechnung, ein durch den Fahrer erzeugtes Antriebsdrehmoment berechnet und dann mit einem Wunsch-Soll-Drehmoment vergleicht. Wenn das vom Fahrer erzeugte Drehmoment dabei kleiner als das Wunsch-Soll-Drehmoment ist, steuert die Steuereinheit 4 den elektrischen Antrieb 3 derart an, dass dieser den Differenzbetrag erzeugt. Es sei angemerkt, dass die Steuereinheit 4 auch anders ausgelegt werden kann, indem sie beispielsweise in Abhängigkeit von den vom Fahrer erzeugten Drehmoment den elektrischen Antrieb 3 derart ansteuert, dass dieser immer einen vorbestimmten Prozentsatz des vom Fahrer erzeugten Drehmoments zusätzlich erzeugt, z.B. zwischen 10 bis 50 %. Ferner sei angemerkt, dass der Drucksensor 8 nur zur Erfassung von Druckänderungen ausgelegt sein muss und daher sehr einfach und kostengünstig aufgebaut sein kann, da er keine Absolutdrücke erfassen muss.

Somit kann erfindungsgemäß ein Unterstützungsgrad durch den Elektromotor direkt am Tretlager 20 über die am Tretlager auftretenden Lagerkräfte erfasst werden. Der Kraftsensor kann dabei an der Außenseite des Tretlagers 20 angeordnet werden, so dass an der Tretwelle kein zusätzlicher Bauraum für einen eventuell dort angebrachten Sensor vorgehalten werden muss. Somit kann die Tretwelle ohne Längenänderung für andere Aufgaben, beispielsweise eine Mitnahme, ein Freilauf usw., eingesetzt werden.

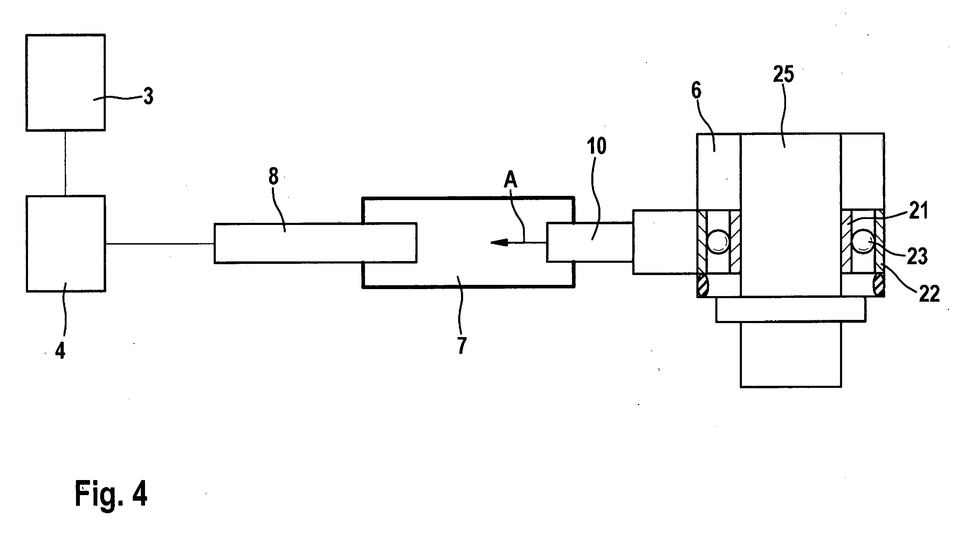

Figur 4 zeigt ein Fahrrad gemäß einem zweiten Ausführungsbeispiel der Erfindung, wobei gleiche bzw. funktional gleiche Bauteile mit den gleichen Bezugszeichen wie im vorhergehenden Ausführungsbeispiel bezeichnet sind. Das zweite Ausführungsbeispiel entspricht im Wesentlichen dem ersten Ausführungsbeispiel, wobei in der Druckmesskammer 7 anstatt Luft eine Hydraulikflüssigkeit angeordnet ist. Hierdurch kann eine genauere Erfassung einer Druckänderung durch den Drucksensor 8 erfolgen.

Hinsichtlich des ersten und zweiten Ausführungsbeispiels sei angemerkt, dass sowohl die Lagerkraftmessung über den Gasdruck als auch über die hydraulische Messung eine räumliche Trennung des Sensors vom Lager ermöglichen. Dadurch ist es möglich, dass der Sensor an einer beliebigen Stelle angebracht werden kann und insbesondere sogar auch auf einer Leiterplatte der Steuereinheit 4. Der Druck kann dann beispielsweise über flexible Schläuche direkt an den Drucksensor auf der Leiterplatte der Steuereinheit 4 übertragen werden. Hierdurch kann ein einfacher Aufbau des elektrischen Fahrrads erreicht werden und insbesondere ein zentrales Steuergerät vorgesehen werden, welches sowohl die Steuereinheit zur Kraftmessung als auch andere Steuereinheiten, wie z.B. zur Batterieüberprüfung oder für elektrisches Licht, integriert werden können. Hierdurch ergibt sich insbesondere ein großer Kostenvorteil für das Steuergerät.

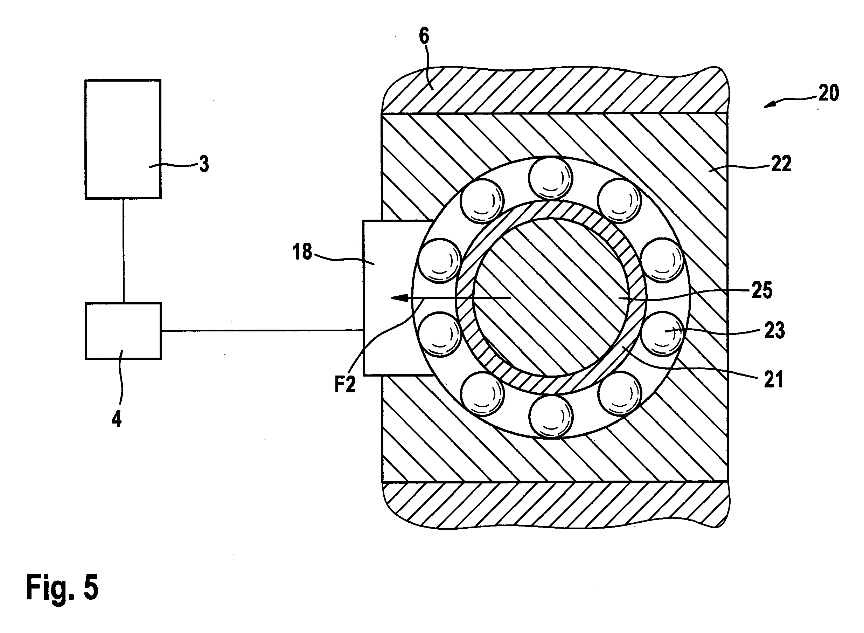

Figur 5 zeigt eine schematische Ansicht eines Fahrrads gemäß einem dritten Ausführungsbeispiel der Erfindung, wobei wiederum gleiche Teile mit den gleichen Bezugszeichen wie in den vorhergehenden Ausführungsbeispielen bezeichnet sind. Im dritten Ausführungsbeispiel ist als Kraftsensor ein Piezoaufnehmer 18 vorgesehen, welcher am Außenring 21 des Tretlagers 20 angeordnet ist. Wie aus Figur 5 ersichtlich ist, ist in diesem Ausführungsbeispiel der Piezoaufnehmer ein Teil des Außenrings 22. Wenn nun auf das Lager eine Kraft F2 wirkt, wird das Material des Piezoaufnehmers 18 elastisch verformt, so dass eine Ladungsänderung auftritt. Nun kann eine entsprechende elektrische Spannung am Piezoaufnehmer 18 gemessen werden, wobei die Höhe der Spannung ein Maß für die am Tretlager auftretende Kraft ist.

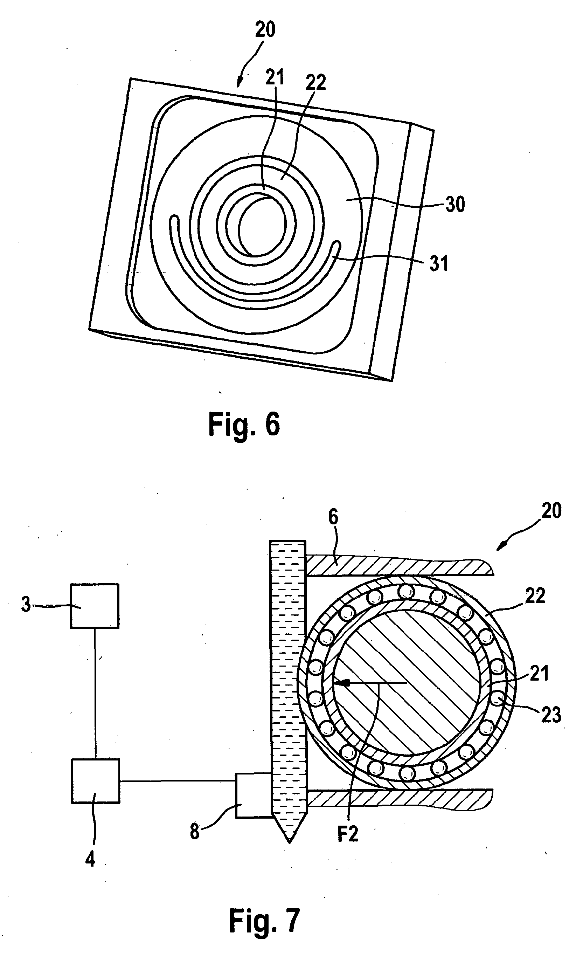

Figur 6 zeigt einen Kraftsensor gemäß einem vierten Ausführungsbeispiel der Erfindung, wobei wiederum gleiche bzw. funktional gleiche Teile mit den gleichen Bezugszeichen wie im vorhergehenden Ausführungsbeispiel bezeichnet sind.

In der perspektivischen Ansicht von Figur 6 ist zu erkennen, dass an der Außenseite des Außenrings 22 ein elastisches Material 30 angeordnet ist. Im elastischen Material 30 ist ein Dehnungsmessstreifen 31 angeordnet. Bei einer Krafteinwirkung auf das Tretlager 20 wird dieses verschoben und das elastische Material 30 zusammengedrückt. Mittels des Dehnungsmessstreifens 31 kann nun eine Verformung des elastischen Materials 30 gemessen werden. Der Dehnungsmessstreifen ist, wie in den vorhergehenden Ausführungsbeispielen, wieder mit der Steuereinheit 4 verbunden (nicht dargestellt), wobei die Dehnung des Dehnungsmessstreifens ein Maß für die am Tretlager 20 vorhandene Kraft und somit das vom Fahrer erzeugte Drehmoment ist.

Figur 7 zeigt ein fünftes Ausführungsbeispiel der Erfindung, wobei wiederum gleiche bzw. funktional gleiche Teile mit den gleichen Bezugszeichen wie in den vorhergehenden Ausführungsbeispielen bezeichnet sind.

Wie aus Figur 7 ersichtlich ist, umfasst der Kraftsensor des fünften Ausführungsbeispiels eine Bohrung 40, welche mit einer Flüssigkeit gefüllt ist. An der Bohrung 40 ist ein Drucksensor 8 angeordnet, welcher wiederum eine Druckänderung in der Bohrung erfasst. Der Außenring 22 des Tretlagers 20 ist dabei mit der Flüssigkeit in der Bohrung in Kontakt, so dass bei Auftreten einer Kraft F2, welche zu einem Verschieben des Tretlagers führt, der Außenring 22 in die Flüssigkeit der Bohrung 40 weiter eintaucht, so dass sich dadurch eine Druckerhöhung in der Bohrung 40 ergibt. Diese Druckerhöhung kann als Druckänderung durch den Drucksensor 8 aufgenommen werden und dann, wie in den anderen Ausführungsbeispielen beschrieben, an die Steuereinheit 4 übertragen werden. Ansonsten entspricht dieses Ausführungsbeispiel den vorhergehenden Ausführungsbeispielen, so dass auf die dort gegebene Beschreibung verwiesen werden kann.

## Patentansprüche

1. Elektrisches Fahrrad, umfassend:
- einen Kurbeltrieb (2) mit Pedalen (24), einer Tretwelle (25) und einem Tretlager (20) mit einem Innenring (21), einem Außenring (22) und dazwischen angeordneten Wälzkörpern (23) zur Lagerung der Tretwelle (25),
- einen elektrischen Antrieb (3) zum Antreiben des Fahrrads,
- eine Steuereinheit (4) zur Steuerung des elektrischen Antriebs (3), und
- einen Kraftsensor (5), welcher am Tretlager angeordnet ist und welcher mit der Steuereinheit (4) verbunden ist, um eine durch einen Fahrer auf den Kurbeltrieb (2) ausgeübte Kraft am Tretlager (20) zu erfassen,
- wobei die Steuereinheit (4) ausgelegt ist, den elektrischen Antrieb (3), basierend auf einem durch den Kraftsensor (5) aufgenommenen Wert der Lagerkraft zu steuern,
- wobei der Kraftsensor (5) eine Druckmesskammer (7), einen Drucksensor (8), welcher an der Druckmesskammer (7) angeordnet ist, und ein Zusatzlager (6) umfasst, in welchem der Außenring (21) des Tretlagers (20) gelagert ist,
- wobei der Außenring (22) des Tretlagers (20) in eine lineare Richtung (B) beweglich gelagert ist, so dass bei einer Krafteinwirkung auf das Tretlager (20) eine Verschiebung des Außenrings (22) auftritt, welche eine Druckänderung in der Druckmesskammer (7) verursacht,
- wobei am Außenring (22) ein Kolbenelement (10) angeordnet ist, und die Druckmesskammer (7) vom Außenring (22) räumlich getrennt ist, wobei das Kolbenelement (10) in die Druckmesskammer (7) reicht,
**dadurch gekennzeichnet, dass**
das elektrische Fahrrad ferner eine Druckregulierungseinrichtung (9) umfasst, welche einen Druck in der Druckmesskammer (7) reguliert.

2. Elektrisches Fahrrad nach Anspruch 1, **dadurch gekennzeichnet, dass** die Druckmesskammer (7) mit einem flüssigen Medium oder einem gasförmigen Medium gefüllt ist.

3. Elektrisches Fahrrad nach Anspruch 1, **dadurch gekennzeichnet, dass** der Kraftsensor ein Piezosensor (18) ist, welcher am Außenring (22) angeordnet ist.

4. Elektrisches Fahrrad nach Anspruch 1, **dadurch gekennzeichnet, dass** der Kraftsensor ein Dehnungsmessstreifen (31) ist, welcher am Außenring (22) angeordnet ist.

5. Elektrisches Fahrrad nach Anspruch 4, **dadurch gekennzeichnet, dass** an einem Teilbereich des Außenrings (22) ein elastisches Material (30) angeordnet ist, wobei der als Dehnungsmessstreifen ausgebildete Kraftsensor mit dem elastischen Material (30) in Kontakt ist.

6. Elektrisches Fahrrad nach Anspruch 1, **dadurch gekennzeichnet, dass** der Kraftsensor eine mit Flüssigkeit gefüllte Bohrung (40) umfasst, welche an einer Außenseite des Außenrings (22) angeordnet ist und mit der Außenseite des Außenrings (22) in Kontakt ist, wobei an der Bohrung (40) ferner ein Drucksensor (8) zur Erfassung einer Druckänderung eines Mediums in der Bohrung angeordnet ist.

7. Elektrisches Fahrrad nach einem der vorhergehenden Ansprüche, **dadurch gekennzeichnet, dass** die Steuereinheit (4) ausgelegt ist, den elektrischen Antrieb (3) derart anzusteuern, dass der elektrische Antrieb (3) eine Antriebskraft bereitstellt, so dass, unabhängig von einer Pedalbetätigung durch den Fahrer, immer eine vorbestimmte konstante Gesamtantriebskraft vorhanden ist, oder dass der elektrische Antrieb eine Antriebskraft bereitstellt, welche immer einem vorbestimmten prozentualen Anteil einer durch den Fahrer aufgebrachten Antriebskraft entspricht.

## Claims

1. Electric bicycle, comprising:
- a crank drive (2) with pedals (24), with a pedal shaft (25) and with a bottom bracket bearing (20) having an inner ring (21), an outer ring (22) and rolling bodies (23), arranged between them, for mounting the pedal shaft (25),
- an electric drive (3) for driving the bicycle,
- a control unit (4) for controlling the electric drive (3), and
- a force sensor (5) which is arranged on the bottom bracket bearing and which is connected to the control unit (4) in order to detect a force at the bottom bracket bearing (20) which is exerted upon the crank drive (2) by a cyclist,
- the control unit (4) being designed to control the electric drive (3) on the basis of a bearing-force value recorded by the force sensor (5),
- the force sensor (5) comprising a pressure-measuring chamber (7), a pressure sensor (8), which is arranged on the pressure-measuring chamber (7), and an additional bearing (6) in which the outer ring (22) of the bottom bracket bearing (20) is mounted,
- the outer ring (22) of the bottom bracket bearing (20) being mounted movably in a linear direction (B), so that, under the action of force upon the bottom bracket bearing (20), displacement of the outer ring (22) occurs, which causes a pressure change in the pressure-measuring chamber (7),
- a piston element (10) being arranged on the outer ring (22), and the pressure-measuring chamber (7) being separated spatially from the outer ring (22), the piston element (10) reaching into the pressure-measuring chamber (7),
**characterized in that**
the electric bicycle comprises, furthermore, a pressure-regulating device (9) which regulates a pressure in the pressure-measuring chamber (7).

2. Electric bicycle according to Claim 1, **characterized in that** the pressure-measuring chamber (7) is filled with a liquid medium or with a gaseous medium.

3. Electric bicycle according to Claim 1, **characterized in that** the force sensor is a piezosensor (18) which is arranged on the outer ring (22).

4. Electric bicycle according to Claim 1, **characterized in that** the force sensor is a strain gauge (31) which is arranged on the outer ring (22).

5. Electric bicycle according to Claim 4, **characterized in that** an elastic material (30) is arranged on a subregion of the outer ring (22), the force sensor designed as a strain gauge being in contact with the elastic material (30).

6. Electric bicycle according to Claim 1, **characterized in that** the force sensor comprises a liquid-filled bore (40) which is arranged on an outside of the outer ring (22) and which is in contact with the outside of the outer ring (22), there being arranged on the bore (40), furthermore, a pressure sensor (8) for detecting a pressure change of a medium in the bore.

7. Electric bicycle according to one of the preceding claims, **characterized in that** the control unit (4) is, designed to activate the electric drive (3) in such a way that the electric drive (3) provides a drive force, so that a predetermined constant overall drive force is always present, independently of pedal actuation by the cyclist, or in such a way that the electric drive provides a drive force which always corresponds to a predetermined percentage fraction of a drive force applied by the cyclist.

## Revendications

1. Bicyclette électrique, comprenant :
- une commande à bielle (2) avec des pédales (24), un arbre de pédalier (25) et un palier de pédalier (20) avec une bague interne (21), une bague externe (22) et des corps de roulement (23) disposés entre elles pour supporter l'arbre de pédalier (25),
- un entraînement électrique (3) pour l'entraînement de la bicyclette,
- une unité de commande (4) pour commander l'entraînement électrique (3), et
- un capteur de force (5) qui est disposé sur le palier de pédalier et qui est connecté à l'unité de commande (4), afin de détecter au niveau du palier de pédalier (20) une force exercée sur la commande à bielle (2) par un cycliste,
- l'unité de commande (4) étant conçue pour commander l'entraînement électrique (3) sur la base d'une valeur de la force de palier enregistrée par le capteur de force (5),
- le capteur de force (5) comprenant une chambre de mesure de pression (7), un capteur de pression (8) qui est disposé au niveau de la chambre de mesure de pression (7) et un palier supplémentaire (6) dans lequel est supportée la bague externe (22) du palier de pédalier (20),
- la bague externe (22) du palier de pédalier (20) étant supportée de manière déplaçable dans une direction linéaire (B), de telle sorte que dans le cas de l'action d'une force sur le palier de pédalier (20), il se produise un déplacement de la bague externe (22) qui provoque une modification de la pression dans la chambre de mesure de pression (7),
- un élément de piston (10) étant disposé au niveau de la bague externe (22), et la chambre de mesure de pression (7) étant séparée spatialement de la bague externe (22), l'élément de piston (10) s'étendant à l'intérieur de la chambre de mesure de pression (7),
**caractérisée en ce que**
la bicyclette électrique comprend en outre un dispositif de régulation de la pression (9) qui régule une pression dans la chambre de mesure de pression (7).

2. Bicyclette électrique selon la revendication 1, **caractérisée en ce que** la chambre de mesure de pression (7) est remplie avec un milieu liquide ou un milieu gazeux.

3. Bicyclette électrique selon la revendication 1, **caractérisée en ce que** le capteur de force est un capteur piézoélectrique (18) qui est disposé au niveau de la bague externe (22).

4. Bicyclette électrique selon la revendication 1, **caractérisée en ce que** le capteur de force est un ruban de mesure de dilatation (31) qui est disposé au niveau de la bague externe (22).

5. Bicyclette électrique selon la revendication 4, **caractérisée en ce qu'**un matériau élastique (30) est disposé au niveau d'une région partielle de la bague externe (22), le capteur de force réalisé sous forme de ruban de mesure de dilatation étant en contact avec le matériau élastique (30).

6. Bicyclette électrique selon la revendication 1, **caractérisée en ce que** le capteur de force comprend un alésage (40) rempli de liquide, qui est disposé au niveau d'un côté extérieur de la bague externe (22) et qui est en contact avec le côté extérieur de la bague externe (22), un capteur de pression (8) étant en outre disposé au niveau de l'alésage (40) afin de détecter une modification de la pression d'un milieu dans l'alésage.

7. Bicyclette électrique selon l'une quelconque des revendications précédentes, **caractérisée en ce que** l'unité de commande (4) est conçue pour commander l'entraînement électrique (3) de telle sorte que l'entraînement électrique (3) fournisse une force d'entraînement de telle sorte qu'indépendamment d'un actionnement d'une pédale par le cycliste, une force d'entraînement totale constante prédéterminée soit toujours présente, ou **en ce que** l'entraînement électrique fournit une force d'entraînement qui correspond toujours à une proportion prédéterminée en pourcentage d'une force d'entraînement appliquée par le cycliste.
